# EUROPEAN PATENT SPECIFICATION

(11) **EP 1 269 647 B1**
(45) Date of publication and mention of the grant of the patent: **05.07.2006**
(21) Application number: 01915524.1
(22) Date of filing: 27.03.2001
(51) Int. Cl.: H04B 1/707

(54) **A RAKE RECEIVER AND A METHOD OF OPERATING A RAKE RECEIVER**
RAKE-EMPFÄNGER UND VERFAHREN ZUM BETREIBEN EINES RAKE-EMPFÄNGERS
RECEPTEUR RAKE ET SON PROCEDE DE FONCTIONNEMENT

(30) Priority: 30.03.2000 GB 0007750; 16.05.2000 GB 0011785
(43) Date of publication of application: 02.01.2003
(73) Proprietor: Aeroflex Cambridge Ltd, Cambridge Technology Centre Melbourn Hertfordshire SG8 6DP (GB)
(72) Inventor: GIANCOLA, Diego, Cambridge CB1 2AQ (GB)
(74) Representative: Pratt, David Martin
(86) International application number: PCT/GB2001/001376
(87) International publication number: WO 2001/076085

(56) References cited:
- EP-A- 0 896 438
- EP-A- 0 984 561
- US-A- 5 490 165

## Description

This invention relates to a rake receiver, and to a method of operating a rake receiver.

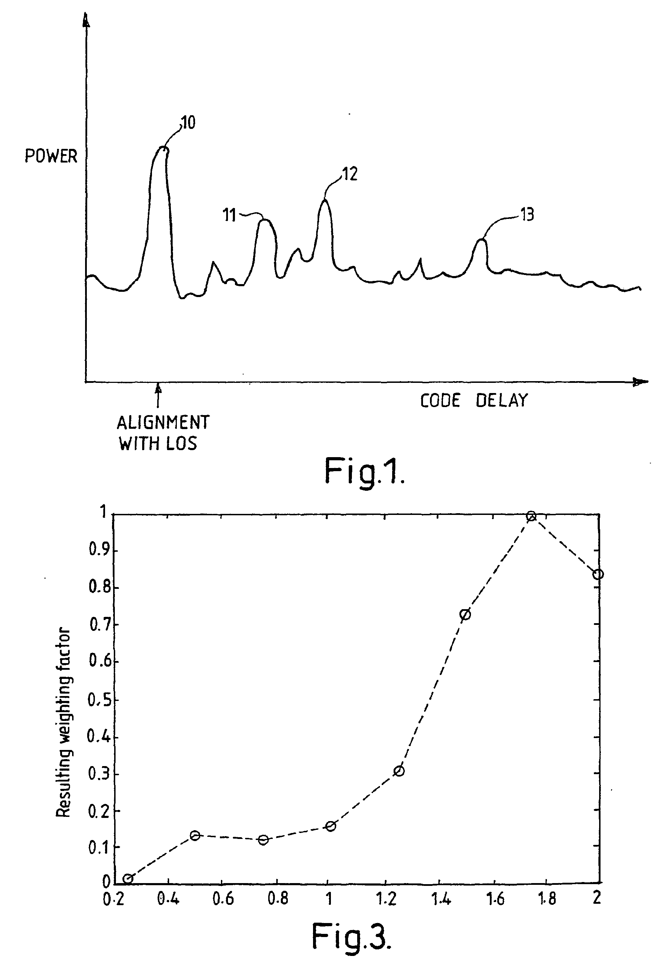

It is common in wideband code division multiple access (W-CDMA) radio receivers to use a rake receiver to process a received signal. A rake receiver comprises a number of correlators, typically four correlators, which are arranged in parallel with their outputs being applied to an adder. The output of the adder is the output signal for the rake receiver. Each correlator can be called a 'finger', and each finger is independently controllable. Since it is necessary to generate a pseudo-random noise (PN) code at the same frequency and phase as the code which is modulated onto the received signal to achieve correlation with a line-of-sight (LOS) signal, it is possible to isolate delayed multipath signals by mixing a delayed version of the code with the received signal. The code delay must be equal to the time delay between the LOS signal and the multipath signal for correlation to occur. In practice, due to receiver limitations and the effects of noise, a characteristic such as that shown in Figure 1 may be obtained.

In Figure 1, amplitude is plotted against code delay for a signal which is received over a short period in time. The LOS signal 10 is clearly visible as the strongest, since it has the largest amplitude. Multipath signals 11, 12, 13 are also visible at various places along the code delay axis (or code space), each having an amplitude independent to the others. Although not visible from this Figure, each component of the signal has its own carrier phase. Each finger of the rake receiver is controlled to follow a component 10-13 of the received signal. Usually, one finger follows the LOS signal 10, and the other fingers each follow a multipath signal 11-13. Often, however, the LOS signal 10 is not sufficiently strong, in which case each finger follows a different multipath signal. A finger includes a mixer and a delay element which operate in such a way that a correlated signal is provided. The carrier phase of the correlated signal is brought to an arbitrary value, which is the same value for each finger, and the amplitude of each signal is adjusted according to an algorithm. The signals from all the fingers are then added by the adder, thereby obtaining efficient signal reception from the received signal. The rake receiver, in effect, 'rakes' the code space for relevant signals, brings them into line with each other, in time and carrier phase, and then sums them. A rake receiver provides a significant increase in signal-to-noise ratio (SNR) compared to a receiver which operates only on the LOS signal or one of the multipath signals.

As the receiver moves relative to a transmitter, such as a cellular base station, the characteristic shown in Figure 1 changes in a number of ways. Most significantly, destructive superposition causes the power of the signals to rise and fall by very significant amounts, with the rate and frequency of the power changes being dependent particularly on the dynamics of the propagation channel. The multipath signals 11-13 also move along the code space, one way or the other, as the difference in the lengths of the signal paths change relative to the LOS path. The carrier phase of the signals also changes over time, albeit more slowly.

To detect the components of the received signal, and to track them with time, it is known to use a delay locked loop (DLL) with each finger. Since the signals 10-13 tend to have a usable width of about one chip (a chip being the shortest possible distance between transitions of the modulating PN code), each finger may sample the code space at three code positions regularly spaced over a distance of one-half of a chip. Here, the sample at the earliest phase of the code is called the early sample, the on-time and the late samples being of increasingly greater code phase. The degree of misalignment of a given finger with the signal being tracked, and the direction of misalignment, is detected by comparing the power of signals from the early sample with the power of those from the late sample. The difference in power and the sign of the difference are provided as a feedback signal to control the movement of the finger along the code space. This is known as a non-coherent DLL since the carrier phases of the signals are not taken into account by the DLL.

After signal acquisition, the position of each finger is updated by its respective DLL. Further resources are allocated to searching the code space for new signals, to which finger allocation may be desirable.

Each finger also has an amplitude detector and a carrier phase detector associated with it. Signals from these detectors are used to modify the signals provided by the fingers before they are provided to the adder.

A problem has been found to arise when two adjacent signals, either the LOS signal 10 and a multipath signal 11-13, or two multipath signals, move closely together, such as may occur with signals reflected from obstacles on either side of the LOS. When the signals reach a distance of about one chip apart, they tend to add and appear as a single signal having, initially at least, a wider pulse shape, in which case a single finger may be allocated to it. Of course, the two signals may have different carrier phases and different powers, and, in most cases, different positions in the code space. Treating the two signals as one, as a conventional receiver does, compromises the signal reconstruction efficiency of the receiver.

EP 896 438 and EP 984 561 relate to known rake receivers which have multipath signal problems.

The present invention provides a rake receiver comprising a plurality of fingers, each finger including means for multiplying a received signal with a locally-generated code, the phase difference between the received signal and the code being individually controllable for each finger so that each finger can be steered to receive a respective ray forming part of the received signal, a detector arranged to detect the difference in power between an early signal and a late signal associated with a given finger, and a weighting element, the detector being arranged to provide a feedback signal to control the position in the code space of the given finger on the basis of the detected power difference, the output of the detector being dependent on the distance between that finger and an adjacent finger, characterised in that the weighting element is arranged to weight the early power signal of a first finger and/or the late power signal of an adjacent, earlier code phase finger upstream of the detector dependent on the distance between the fingers, thereby to influence the feedback signal.

Preferably, the rake receiver further comprises a receiver as claimed in claim 1, further comprising a weighting signal generator arranged to provide a weighting signal, in response to a signal indicative of the distance between the fingers, to control the weighting element.

Advantageously, the weighting signal generator provides the weighting signal dependent on the measured power of the fingers and on the distance between the fingers. Conveniently, the weighting signal generator comprises a look-up table.

In a preferred embodiment, the rake receiver further comprises means for independently controlling the weighting signals applied to weight the early and the late power signals of respectively the first and the adjacent finger.

Preferrably, the rake receiver further comprises a scheduler arranged to update the positions of the fingers in a sequence which is dependent on the power of the signals received by the respective fingers. Advantageously, the scheduler is such as to update the positions of fingers having a higher power signal prior to updating the positions of fingers with lower power signals. Conveniently, the scheduler is such as to update the positions of fingers in a descending order according to their signal power.

The invention also provides a method of operating a rake receiver having a plurality of fingers, the method comprising, in each finger, multiplying a received signal with a locally-generated code, the phase difference between the received signal and the code being individually controllable for each finger so that each finger can be steered to receive a respective ray forming part of the received signal, detecting the difference in power between an early signal and a late signal associated with a given finger, and providing a feedback signal to control the position in the code space of the given finger on the basis of the detected power difference, the feedback signal being dependent on the distance between that finger and an adjacent finger, characterised in that the early power signal of a first finger and/or the late power signal of an adjacent, earlier code phase finger are weighted prior to providing the feedback signal, the weighting being dependent on the distance between the fingers, thereby to influence the feedback signal.

Preferrably, the invention further comprises providing a weighting signal, in response to a signal indicative of the distance between the fingers, to control the weighting step.

Embodiments of the present invention will now be described, by way of example only, with reference to the accompanying drawings, of which:
Figure 1 shows a correlation plot of a typical received signal;
Figures 2, 4 and 6 schematically show parts of rake receivers according to this invention; and
Figures 3 and 5 show weighting values which may be stored in the look-up-tables of Figures 2 and 4 respectively.

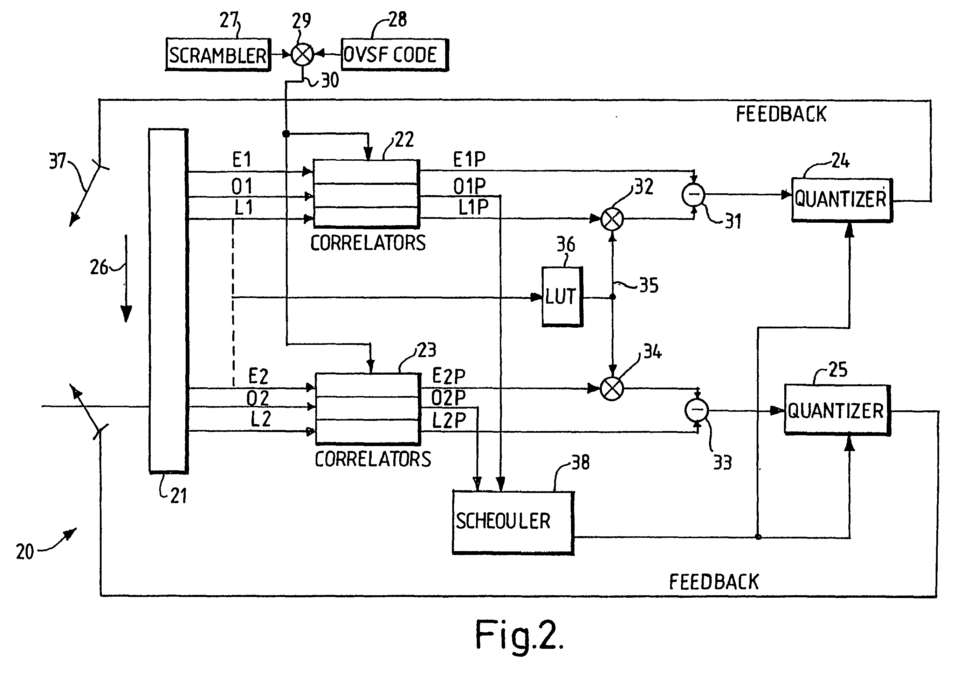

Referring to Figure 2, a receiver 20 comprises generally a signal delay element 21, first and second banks of correlators 22, 23 and first and second quantisers 24, 25. The correlators 22 and the quantiser 24 form part of a first finger, and the correlators 23 and the quantiser 25 form part of a second finger. The signal delay element is schematic. It can be thought of as a tapped delay line from which outputs show a signal received at successive delays equal to one-eighth of a chip period of the channel specific OVSF code. The channel may be a pilot channel, a control channel or a use specific data/voice channel. The distance in code space between adjacent outputs is the reciprocal of the oversampling factor (OSF) of the receiver. The characteristics of the OVSF code are well documented in the literature. The OVSF code is modulated onto the received signal at the transmitter (not shown). The further along the delay element 21, in the direction of the arrow 26, the output is, the greater the amount that the received signal is delayed. Hence, the first finger processes signals which have less delay compared to the LOS signal than those processed by the second finger. The first finger may, of course, process the LOS signal.

Each finger receives signals from three of the outputs of the delay element 21. The first finger has an early signal E1, an on-time signal O1 and a late signal L1, received from successive outputs of the delay element 21. Since the outputs of the delay element 21 are spaced one-eighth of a chip apart, the E1 and the L1 signals are separated by one-quarter of a chip. The second finger similarly has early, on-time and late signals E2, 02 and L2. A scrambling code generator 27 and an OVSF code generator 28 provide codes which are mixed together in a mixer 29, the resultant composite signal being provided on an output 30 to each of the banks of correlators 22, 23. The scrambling code generator 27 provides a scrambling code which is unique to the transmitter (not shown), which is, for example, a cellular telephone base station, and the OVSF code generator 28 provides the OVSF code which is unique to the channel. The receiver 20 may be, for example, part of a cellular telephone radio receiver. The scrambling code generator 27 and the OVSF code generator 28 are controlled in phase and in frequency in a conventional manner. The correlators 22 mix the composite signal provided on the mixer output 30 with each of the E1, O1 and L1 signals in parallel, to generate power signals E1P, 01P and LIP respectively. The correlators 23 operate similarly to provide power signals E2P, 02P and L2P.

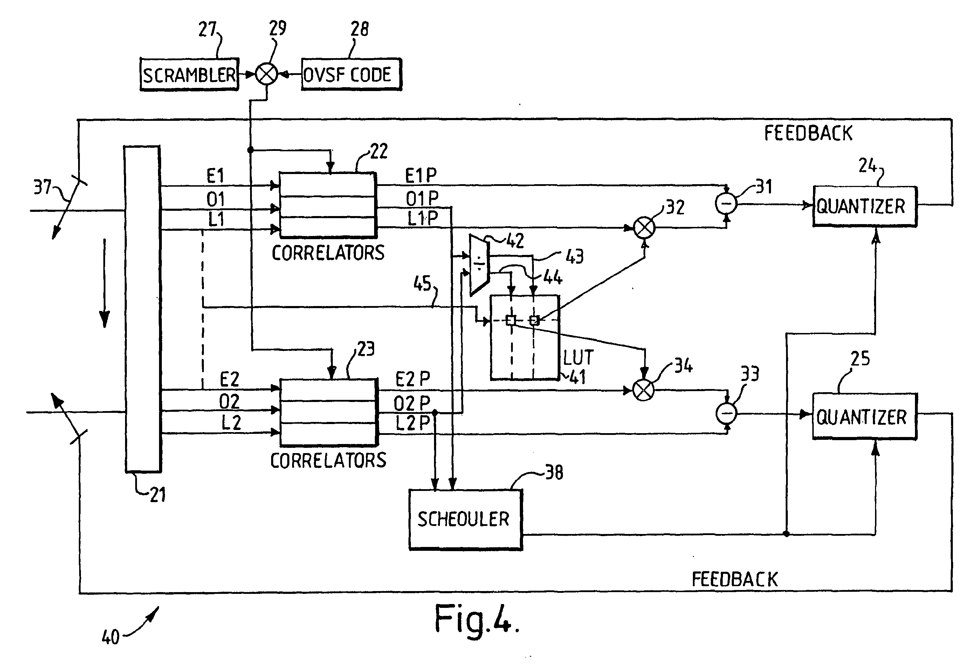

The signals E1P, O1P, LIP, E2P, 02P and L2P are signals found around the crests of two adjacent rays forming the received signal, such as the rays 11 and 12 of Figure 1. The signals E1P and LIP are provided to different inputs of a subtractor 31, the LIP signal being provided via a multiplier 32. The signals L2P and E2P are similarly provided to a second subtractor 33, the E2P signal being provided via a second multiplier 34. The multipliers 32 and 34 each multiply the signal provided on its respective power signal input by a weighting signal provided on an output 35 of a look-up table (LUT) 36. A detector (not shown) detects the distance in code space between the output of the delay element 21 from which the O1 signal is taken and the output from which the 02 signal is taken. The distance so detected is provided as an input signal to the LUT 36. The LUT 36 contains two columns, the first column containing data relating to the possible distances between the first and second fingers, to a resolution of one-eighth of a chip, and the second column containing corresponding weighting data. A particularly advantageous data set is shown in Figure 3.

As shown in Figure 3, the weighting data value increases from zero for a 0.25 chip separation to unity for a 1.75 chip separation. A greater rate of increase of weighting value with chip separation occurs upwards of one chip separation than occurs downwards of one chip separation. In this Figure, there is a small decrease from 1.75 chips to 2 chips. The optimum weighting data is dependent particularly on the shape of the pulse shaping filter constituted by the DLL, and a particular shape may require a slight decrease in weighting value with increased separation.

During normal operation, i.e. when the distance between the first and second fingers in the code space is sufficiently great that the signals tracked by the fingers do not add constructively, operation is as follows. The LUT 36 receives a signal from the detector (not shown) indicating that the distance between the fingers is greater than two chips. Accordingly, the output 35 of the LUT 36 is provided with a unity weighting signal (the weighting signal is the same as the weighting data value stored in the LUT). Accordingly, the subtractor 31 receives the LIP and the E1P signals from the bank of correlators 22, the L1P signal being unweighted by the multiplier 32. The subtractor 31 provides a signal to the quantiser 24 which is indicative of the difference in amplitude of the LIP and the E1P signals, and indicative of the sign of the difference. The quantiser 24 receives the difference signal from the subtractor, and provides an increment output signal if it determines that the finger is more than one-sixteenth of a chip early compared to the ray, a decrement signal if it determines that the finger is more than one- sixteenth of a chip early compared to the corresponding ray, and no signal otherwise. The signal so provided is fed as a feedback signal to a control device (indicated schematically at 37) which in effect moves the finger along the delay element 21 so as to align the finger more closely with the ray. The quantiser 24 uses conventional inference logic. The operation of the second finger is identical.

When the detector (not shown) provides a signal to the LUT 36 indicating that the distance between the fingers has fallen below 1.75 chips, the LUT provides to the multipliers 32 and 34 a weighting signal having a value less than unity. In the first finger, this causes the L1P signal to be weighted downwardly, and the result is received by the subtractor 31. The subtractor 31, therefore, receives power signals which are not truly indicative of the difference in power of the LIP and E1P signals, and the signal provided to the quantiser 24 is, therefore, artificially distorted. By reducing the LIP power signal, the quantiser 24 sees a signal which indicates that the finger does not need incrementing along the delay element 21 to the extent that would have been found had the multiplier 32 not been present. Moreover, the Figure 3 plot indicates that this effect is increased as the distance between the fingers decreases. Therefore, as the distance between the fingers closes beyond 1.75 chips separation, the receiver 20 artificially slows down the relative movement of the fingers towards each other.

Depending on the exact form of the received rays, the fingers usually then stop moving together, even if the rays continue converging, and subsequently are pushed apart.

Although this may prevent the fingers accurately tracking the rays over the code space, it is considered that this offers an improvement to the prior art in which the two rays overlap and are tracked by a single finger, even if the carrier phases of the two rays are different.

A scheduler 38 is arranged to receive the on-time power signals O1P and 02P from the correlators 22 and 23. The scheduler 38 detects which of the power signals O1P and 02P has the greater amplitude, and controls the quantisers 24 and 25 accordingly. In particular, the scheduler 38 controls the quantiser 24, 25 which is associated with the finger having the higher power to update the position of that finger first. Once the finger position has been updated, the amplitudes of the signals O1P and 02P may have changed, as may have the distance between the fingers. The scheduler 38 subsequently controls the other quantiser 24, 25 to update the position of its finger. This allows increased resistance to fingers becoming overlapping.

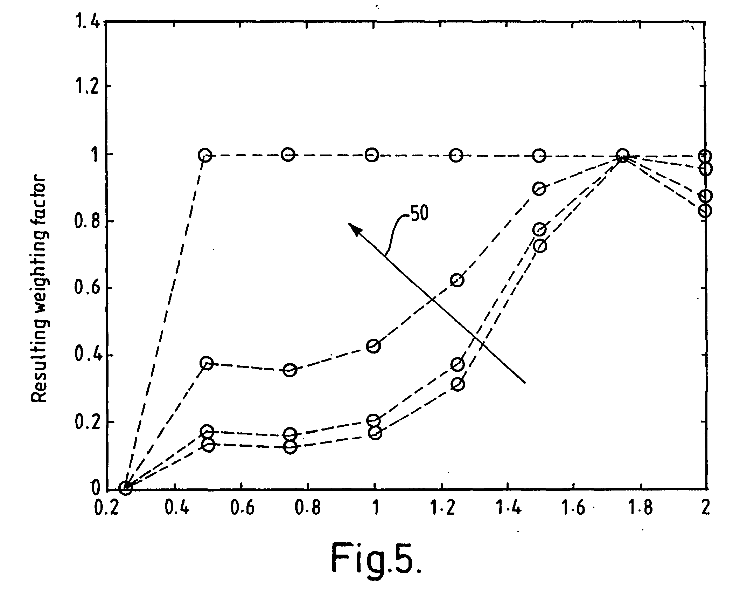

Referring now to Figure 4, an alternative receiver 40 is shown, with reference characters retained from Figure 2 for like elements. The detector (not shown) which detects the distance between the fingers provides an indicative signal to a row select input 45 of a two dimensional LUT 41. The O1P and 02P signals are provided to different inputs of a divider 42, which provides a signal indicative of the amplitude of O1P divided by the amplitude of 02P on an output 43. The reciprocal signal is provided on an output 44. The outputs 43, 44 of the divider 42 are applied to respective column select inputs of the LUT 41. Suitable weighting data is stored in the LUT 41. The weighting data value stored in the LUT 41 at the position marked by the inputs 45 and 43 is provided as a weighting signal to the multiplier 32. Similarly, the data value at the position marked by the inputs 45 and 44 is provided to the multiplier 34. Suitable data values for the LUT 41 are shown in Figure 5.

In Figure 5, finger separation versus weighting value is shown for different values of O1P divided by 02P, increasing in the direction of arrow 50. The receiver 40 therefore weights the damping of the fingers moving together, which is provided by this invention, according to the power of the rays received by the fingers. In this way, stronger rays suffer less from the effects of weaker rays, whilst the weaker rays are more compromised. This is advantageous since the stronger rays contribute more to signal reconstruction than do the weaker rays.

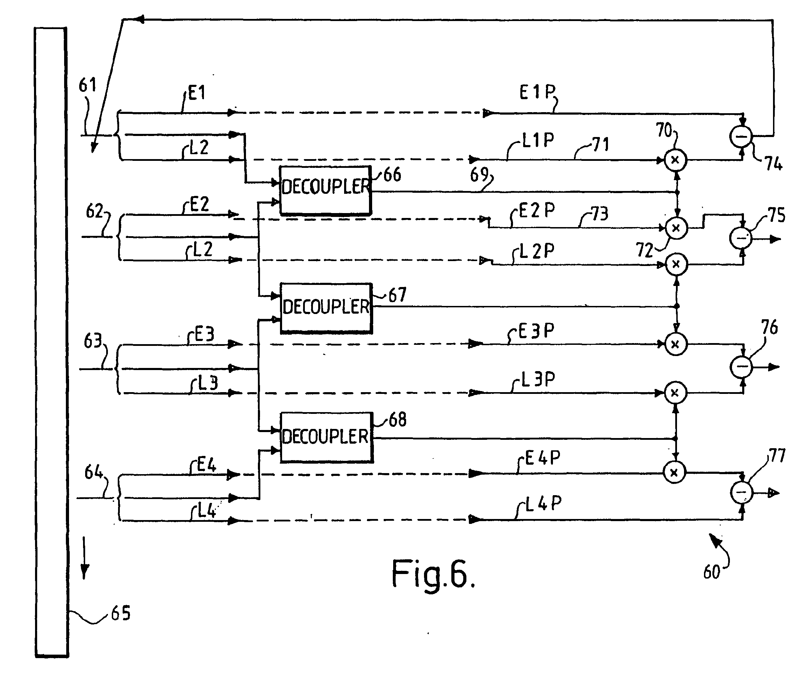

Referring now to Figure 6, a rake receiver 60 is shown comprising first to fourth fingers having inputs 61 to 64 respectively. The inputs 61 to 64 are taken from a tapped delay line 65. The correlators are not shown for simplicity. Between adjacent fingers are decouplers 66 to 68, which each comprise a respective detector (not shown) arranged to detect the distance between the fingers with which the decoupler is associated, and a respective look-up table (not shown), such as the Figure 2 look-up table. The decoupler 66 provides weighting signals on an output 69 to a multiplier 70 interposed in a late power line 71 of the first finger, and to a multiplier 72 interposed in an early power line 73 of the second finger. Each finger includes a respective subtractor 74 to 77, and operates in substantially the same way as that described above with reference to Figure 2. Figure 6 illustrates how the invention can be applied to receivers having more than two fingers. Of course, more than four fingers may be provided, and it is preferred that six or eight fingers are present in the receiver 60. Having six or eight fingers is a good compromise between hardware complexity and signal reconstruction efficiency.

Instead of the tapped delay line implementation, it is possible to perform the invention using a "small" memory scheme in which finger alignment occurs by varying the phase of the scrambling sequence (including the OVSF code and the unique transmitter code), and mixing this with the received signal. In this implementation, each finger uses a different code phase, with the finger being moveable along a short tapped delay line of one chip (eight samples) length. When a finger moves off one end of its small tapped delay line, the phase of the code applied to the delay line is changed accordingly.

## Claims

1. A rake receiver (20) comprising a plurality of fingers, each finger including means (22, 23) for multiplying a received signal with a locally-generated code, the phase difference between the received signal and the code being individually controllable for each finger so that each finger can be steered to receive a respective ray forming part of the received signal, a detector arranged to detect the difference in power between an early signal (E1, E2) and a late signal (L1, L2) associated with a given finger, and a weighting element, the detector being arranged to provide a feedback signal to control the position in the code space of the given finger on the basis of the detected power difference, the output of the detector being dependent on the distance in the code space between that finger and an adjacent finger, **characterised in that** the weighting element is arranged to weight the early power signal (E2P) of a first finger and/or the late power signal (L1P) of an adjacent, earlier code phase finger upstream of the detector dependent on the distance between the fingers, thereby to influence the feedback signal.

2. A receiver as claimed in claim 1, further comprising a weighting signal generator (36) arranged to provide a weighting signal, in response to a signal indicative of the distance between the fingers, to control the weighting element.

3. A receiver as claimed in claim 2, in which the weighting signal generator (36) provides the weighting signal dependent on the measured power of the fingers and on the distance between the fingers.

4. A receiver as claimed in claim 2 or claim 3, in which the weighting signal generator comprises a look-up table (36).

5. A receiver as claimed in any of claims 1 to 4, further comprising means for independently controlling the weighting signals applied to weight the early and the late power signals (E2P and L1P) of respectively the first and the adjacent finger.

6. A receiver as claimed in any one of claims 1 to 5, further comprising a scheduler (38) arranged to update the positions of the fingers in a sequence which is dependent on the power of the signals received by the respective fingers.

7. A receiver as claimed in claim 6, in which the scheduler (38) is such as to update the positions of fingers having a higher power signal prior to updating the positions of fingers with lower power signals.

8. A receiver as claimed in claim 7, in which the scheduler (38) is such as to update the positions of fingers in a descending order according to their signal power.

9. A radio receiver including a rake receiver as claimed in any one of claims 1 to 8.

10. A radio telephone including a radio receiver as claimed in claim 9.

11. A method of operating a rake receiver (20) having a plurality of fingers, the method comprising, in each finger, multiplying a received signal with a locally-generated code, the phase difference between the received signal and the code being individually controllable for each finger so that each finger can be steered to receive a respective ray forming part of the received signal, detecting the difference in power between an early signal and a late signal associated with a given finger, and providing a feedback signal to control the position in the code space of the given finger on the basis of the detected power difference, the feedback signal being dependent on the distance in the code space between that finger and an adjacent finger, **characterised in that** the early power signal of a first finger and/or the late power signal of an adjacent, earlier code phase finger are weighted prior to providing the feedback signal, the weighting being dependent on the distance between the fingers, thereby to influence the feedback signal.

12. A method as claimed in claim 11, further comprising providing a weighting signal, in response to a signal indicative of the distance between the fingers, to control the weighting step.

13. A method as claimed in claim 12, in which the weighting signal is provided dependent on the measured power of the fingers and on the distance between the fingers.

14. A method as claimed in any of claims 11 to 13, further comprising independently controlling the weighting signals applied to weight the early and the late power signals of respectively the first and the adjacent finger.

15. A method as claimed in any of claims 11 to 14, in which the positions of the fingers are updated by a sequencer which is dependent on the power of the signals received by the respective fingers.

16. A method as claimed in claim 15, in which the positions of fingers having a higher power signal are updated prior to the positions of fingers with lower power signals being updated.

17. A receiver as claimed in claim 14, in which the positions of fingers are updated in a descending order according to their signal power.

## Patentansprüche

1. Rake-Empfänger (20), mit einer Anzahl von Fingern, von denen jeder Finger Mittel (22,23) zur Multiplikation eines empfangenen Signals mit einem lokal erzeugten Code umfaßt, wobei die Phasendifferenz zwischen dem empfangenen Signal und dem Code für jeden Finger individuell steuerbar ist, so dass jeder Finger zum Empfang eines jeweils strahlbildenden Teils des empfangenen Signals gesteuert werden kann, einem Detektor, der dazu angeordnet ist, die Differenz der Leistung zwischen einem frühen Signal (E1,E2) und einem späten Signal (L1,L2) für einen vorgegebenen Finger zu bestimmen, und einem Gewichtungselement, welcher Detektor dazu angeordnet ist, ein Rückkopplungssignal zur Steuerung der Position in dem Code-Raum des vorgegebenen Fingers auf der Grundlage der bestimmten Leistungsdifferenz zu erzeugen, wobei die Ausgabe des Detektors von dem Abstand in dem Code-Raum zwischen dem Finger und einem benachbarten Finger abhängig ist, **dadurch gekennzeichnet, dass** das Gewichtungselement dazu vorgesehen ist, das frühe Leistungssignal (E2P) eines ersten Fingers und/oder das späte Leistungssignal (L1P) eines benachbarten, früheren Codephasen-Fingers stromaufwärts des Detektors in Abhängigkeit von dem Abstand zwischen den Fingern zu gewichten, zur Beeinflussung des Rückkopplungssignals.

2. Empfänger gemäß Anspruch 1, ferner umfassend einen Gewichtungssignal-Generator (36), der dazu angeordnet ist, ein Gewichtungssignal auf das Signal hin zu erzeugen, welches den Abstand zwischen den Fingern anzeigt, zur Steuerung des Gewichtungselements.

3. Empfänger gemäß Anspruch 2, bei welchem der Gewichtungssignal-Generator (36) das Gewichtungssignal in Abhängigkeit von der gemessenen Leistung der Finger und vom Abstand zwischen den Fingern erzeugt.

4. Empfänger gemäß Anspruch 2 oder Anspruch 3, bei welchem der Gewichtungssignal-Generator eine Nachschlagetabelle (36) umfaßt.

5. Empfänger gemäß einem der Ansprüche 1 bis 4, ferner umfassend Mittel zur unabhängigen Steuerung der Gewichtungssignale, die dazu angewendet werden, die frühen und die späten Leistungssignale (E2P und L1P) des jeweils ersten und des benachbarten Fingers zu gewichten.

6. Empfänger gemäß einem der Ansprüche 1 bis 5, ferner umfassend ein Steuerprogramm (38), das dazu vorgesehen ist, die Positionen der Finger in einer Abfolge zu aktualisieren, welche von der Leistung der Signale abhängig ist, die von den jeweiligen Fingern empfangen werden.

7. Empfänger gemäß Anspruch 6, bei welchem das Steuerprogramm (38) derart ausgebildet ist, dass die Positionen von Fingern mit einem höheren Leistungssignal vor der Aktualisierung der Positionen von Fingern mit niedrigeren Leistungssignalen aktualisiert werden.

8. Empfänger gemäß Anspruch 7, bei welchem das Steuerprogramm (38) derart ausgebildet ist, dass die Positionen von Fingern in absteigender Reihenfolge entsprechend ihrer Signalleistung aktualisiert werden.

9. Funkempfänger, umfassend einen Rake-Empfänger gemäß einem der Ansprüche 1 bis 8.

10. Funktelefon, umfassend einen Funkempfänger gemäß Anspruch 9.

11. Verfahren zum Betrieb eines Rake-Empfängers (20) mit einer Anzahl von Fingern, welches Verfahren für jeden Finger die Multiplikation eines empfangenen Signals mit einem lokal erzeugten Code umfaßt, wobei die Phasendifferenz zwischen dem empfangenen Signal und dem Code für jeden Finger individuell steuerbar ist, so dass jeder Finger zum Empfang eines jeweiligen Strahls gesteuert werden kann, der Teil des empfangenen Signals ist, sowie ferner die Bestimmung der Leistungsdifferenz zwischen einem frühen Signal und einem späten Signal, die einem vorgegebenen Finger zugeordnet sind, und die Erzeugung eines Rückkopplungssignals zur Steuerung der Position des vorgegebenen Fingers in dem Code-Raum auf der Grundlage der bestimmten Leistungsdifferenz, welches Rückkopplungssignal abhängig ist von dem Abstand im Code-Raum zwischen dem Finger und einem benachbarten Finger, **dadurch gekennzeichnet, dass** das frühe Leistungssignal eines ersten Fingers und/oder das späte Leistungssignal eines benachbarten, früheren Codephasen-Fingers vor der Erzeugung des Rückkopplungssignals gewichtet werden, wobei die Gewichtung abhängig ist vom Abstand zwischen den Fingern, zur Beeinflussung des Rückkopplungssignals.

12. Verfahren gemäß Anspruch 11, ferner umfassend die Erzeugung eines Gewichtungssignals auf ein Signal hin, welches den Abstand zwischen den Fingern anzeigt, zur Steuerung des Gewichtungsschritts.

13. Verfahren gemäß Anspruch 12, bei welchem das Gewichtungssignal in Abhängigkeit von der gemessenen Leistung der Finger und vom Abstand zwischen den Fingern erzeugt wird.

14. Verfahren gemäß einem der Ansprüche 11 bis 13, ferner umfassend die unabhängige Steuerung der Gewichtungssignale, die zur Gewichtung der frühen und der späten Leistungssignale des jeweils ersten und benachbarten Fingers verwendet werden.

15. Verfahren gemäß einem der Ansprüche 11 bis 14, bei welchem die Positionen der Finger durch einen Folgezähler aktualisiert werden, der von der Leistung der von den jeweiligen Fingern empfangenen Signale abhängig ist.

16. Verfahren gemäß Anspruch 15, bei welchem die Positionen von Fingern mit einem höheren Leistungssignal aktualisiert werden, bevor die Positionen von Fingern mit niedrigeren Leistungssignalen aktualisiert werden.

17. Empfänger gemäß Anspruch 14, bei welchem die Positionen von Fingern in einer absteigenden Reihenfolge entsprechend ihrer Signalleistung aktualisiert werden.

## Revendications

1. Récepteur rake (20) comprenant une pluralité de doigts, chaque doigt comprenant des moyens (22, 23) pour multiplier un signal reçu par un code généré localement, la différence de phase entre le signal reçu et le code pouvant être commandée individuellement pour chaque doigt de sorte que chaque doigt puisse être orienté pour recevoir un rayon respectif faisant partie du signal reçu, un détecteur agencé pour détecter la différence de puissance entre un signal en avance (El, E2) et un signal en retard (L1, L2) associés à un doigt donné, et un élément de pondération, le détecteur étant agencé pour fournir un signal de rétroaction pour commander la position dans l'espace de code du doigt donné sur la base de la différence de puissance détectée, la sortie du détecteur étant fonction de la distance dans l'espace de code entre ce doigt et un doigt adjacent, **caractérisé en ce que** l'élément de pondération est agencé pour pondérer le signal de puissance en avance (E2P) d'un premier doigt et/ou le signal de puissance en retard (L1P) d'un doigt de phase de code antérieure adjacent en amont du détecteur en fonction de la distance entre les doigts, pour influencer de ce fait le signal de rétroaction.

2. Récepteur selon la revendication 1, comprenant en outre un générateur de signal de pondération (36) agencé pour fournir un signal de pondération, en réponse à un signal indicatif de la distance entre les doigts, pour commander l'élément de pondération.

3. Récepteur selon la revendication 2, dans lequel le générateur de signal de pondération (36) fournit le signal de pondération en fonction de la puissance mesurée des doigts et de la distance entre les doigts.

4. Récepteur selon la revendication 2 ou la revendication 3, dans lequel le générateur de signal de pondération comprend une table de correspondance (36).

5. Récepteur selon l'une quelconque des revendications 1 à 4, comprenant en outre des moyens pour commander de manière indépendante les signaux de pondération appliqués pour pondérer les signaux de puissance en avance et en retard (E2P et L1P) respectivement du premier doigt et du doigt adjacent.

6. Récepteur selon l'une quelconque des revendications 1 à 5, comprenant en outre un superviseur (38) agencé pour mettre à jour les positions des doigts dans un ordre qui est fonction de la puissance des signaux reçus par les doigts respectifs.

7. Récepteur selon la revendication 6, dans lequel le superviseur (38) est tel qu'il met à jour les positions des doigts ayant un signal de puissance plus élevée avant de mettre à jour les positions des doigts avec des signaux de puissance plus faible.

8. Récepteur selon la revendication 7, dans lequel le superviseur (38) est tel qu'il met à jour les positions des doigts dans un ordre descendant selon leur puissance de signal.

9. Récepteur radio comprenant un récepteur rake selon l'une quelconque des revendications 1 à 8.

10. Radiotéléphone comprenant un récepteur radio selon la revendication 9.

11. Procédé de mise en oeuvre d'un récepteur rake (20) comportant une pluralité de doigts, le procédé comprenant, dans chaque doigt, la multiplication d'un signal reçu par un code généré localement, la différence de phase entre le signal reçu et le code pouvant être commandée individuellement pour chaque doigt de sorte que chaque doigt puisse être orienté pour recevoir un rayon respectif faisant partie du signal reçu, la détection de la différence de puissance entre un signal en avance et un signal en retard associés à un doigt donné, et la fourniture d'un signal de rétroaction pour commander la position dans l'espace de code du doigt donné sur la base de la différence de puissance détectée, le signal de rétroaction étant fonction de la distance dans l'espace de code entre ce doigt et un doigt adjacent, **caractérisé en ce que** le signal de puissance en avance d'un premier doigt et/ou le signal de puissance en retard d'un doigt de phase de code antérieure adjacent sont pondérés avant la fourniture du signal de rétroaction, la pondération étant fonction de la distance entre les doigts, pour influencer de ce fait le signal de rétroaction.

12. Procédé selon la revendication 11, comprenant en outre la fourniture d'un signal de pondération, en réponse à un signal indicatif de la distance entre les doigts, pour commander l'étape de pondération.

13. Procédé selon la revendication 12, dans lequel le signal de pondération est fourni en fonction de la puissance mesurée des doigts et de la distance entre les doigts.

14. Procédé selon l'une quelconque des revendications 11 à 13, comprenant en outre la commande de manière indépendante des signaux de pondération appliqués pour pondérer les signaux de puissance en avance et en retard respectivement du premier doigt et du doigt adjacent.

15. Procédé selon l'une quelconque des revendications 11 à 14, dans lequel les positions des doigts sont mises à jour par un séquenceur qui est fonction de la puissance des signaux reçus par les doigts respectifs.

16. Procédé selon la revendication 15, dans lequel les positions des doigts ayant un signal de puissance plus élevée sont mises à jour avant que les positions des doigts avec des signaux de puissance plus faible ne soient mises à jour.

17. Récepteur selon la revendication 14, dans lequel les positions des doigts sont mises à jour dans un ordre descendant selon leur puissance de signal.
